# EUROPEAN PATENT SPECIFICATION

(11) **EP 3 798 023 B1**
(45) Date of publication and mention of the grant of the patent: **15.11.2023**
(21) Application number: 20197447.4
(22) Date of filing: 22.09.2020
(51) Int. Cl.: B60C 11/12, B60C 11/03

(54) **PNEUMATIC TIRE**
LUFTREIFEN
PNEUMATIQUE

(30) Priority: 27.09.2019 JP 2019177182
(43) Date of publication of application: 31.03.2021
(73) Proprietor: Sumitomo Rubber Industries, Ltd., Kobe-shi, Hyogo-ken 651-0072 (JP)
(72) Inventor: TAKAHASHI, Shingo, Kobe-shi, Hyogo 651-0072 (JP)
(74) Representative: Manitz Finsterwald Patent- und Rechtsanwaltspartnerschaft mbB

(56) References cited:
- EP-A2- 0 664 230
- JP-A- H10 244 813
- JP-A- 2006 347 468
- JP-A- 2010 120 586
- US-A1- 2010 307 650
- US-A1- 2012 000 585

## Description

### BACKGROUND OF THE INVENTION

### Field of the Invention

The present invention relates to a pneumatic tire.

### Description of the Background Art

For example, a tread of a tire mounted to a vehicle such as a truck and a bus, that is, a tread of a heavy duty pneumatic tire has a large volume. Heat is not easily transmitted to a tread having a large volume. A heated state is controlled so as not to excessively vulcanize components such as sidewalls during production of a tire (for example, see Japanese Laid-Open Patent Publication No. 2000-326706).
JP 2006 347468 A discloses a pneumatic tire comprising the features according to the preamble of claim 1.
US 2010/0307650 A1 discloses a pneumatic tire according to a related technology, but comprising a single rod within a respective shoulder block only.
EP 0 664 230 A2 discloses a pneumatic tire according to a related technology, but without shoulder blocks having rods.
US 2012/0000585 A1 discloses a pneumatic tire according to a related technology.

The present invention has been made in view of such circumstances, and an object of the present invention is to provide a pneumatic tire that allows productivity to be improved by effectively heating a tread and allows improvement of wear resistance and reduction of rolling resistance to be achieved.

### SUMMARY OF THE INVENTION

This object is satisfied by a pneumatic tire comprising the features of claim 1. The pneumatic tire includes a tread having a plurality of land portions demarcated by circumferential grooves. In the pneumatic tire, sipes are formed in at least one of the land portions to form a plurality of rods each surrounded by the sipes. Each rod has a bent portion between an outer surface of the rod and a root thereof. Each rod is bent so as to form a corner at the bent portion.
The land portions are shoulder land portions that are disposed on outer sides in an axial direction and that extend in a circumferential direction, each shoulder land portion has an axial groove that extends across the shoulder land portion to form a plurality of shoulder blocks spaced from each other in the circumferential direction, and at least a part of the plurality of shoulder blocks has the rods.

Preferably, in the pneumatic tire, a cross-sectional shape of each rod is a polygonal shape having at least three sides.

Preferably, in the pneumatic tire, at least one side of the cross-sectional shape of the rod extends in an axial direction.

Preferably, in the pneumatic tire, the cross-sectional shape of the rod is a hexagonal shape.

Preferably, in the pneumatic tire, the rods are aligned in an axial direction and a circumferential direction.

Preferably, in the pneumatic tire, a vertex portion of the bent portion deviates from an outer surface portion of each rod in a circumferential direction.

Preferably, in the pneumatic tire, the sipes are independent of the circumferential grooves and the axial groove.

In the pneumatic tire according to the present invention, the tread is effectively heated. In the tire, productivity is enhanced, and improvement of wear resistance and reduction of rolling resistance are achieved.

### BRIEF DESCRIPTION OF THE DRAWINGS

FIG. 1 is a cross-sectional view of a part of a heavy duty pneumatic tire according to one embodiment of the present invention;
FIG. 2 is a development of a tread surface of the tire shown in FIG. 1;
FIG. 3 is a cross-sectional view taken along a line III-III in FIG. 2;
FIG. 4 illustrates production of a tire; and
FIG. 5 is a cross-sectional view of a sipe according to a modification.

### DESCRIPTION OF THE PREFERRED EMBODIMENTS

Hereinafter, the present invention will be described in detail according to preferred embodiments with reference to the drawings as appropriate.

In the present invention, a state where a tire is mounted to a normal rim, the internal pressure of the tire is adjusted to a normal internal pressure, and no load is applied to the tire is referred to as a normal state. In the present invention, unless otherwise specified, dimensions and angles of components of the tire are measured in the normal state.

The normal rim represents a rim that is defined by a standard with which the tire complies, and is, for example, the "standard rim" in the JATMA standard, the "Design Rim" in the TRA standard, and the "Measuring Rim" in the ETRTO standard.

The normal internal pressure represents an internal pressure that is defined by a standard with which the tire complies, and is, for example, the "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard. In the case of a tire for a passenger car, the normal internal pressure is 180 kPa unless otherwise specified.

The normal load represents a load that is defined by a standard with which the tire complies, and is, for example, the "maximum load capacity" in the JATMA standard, the "maximum value" recited in "TIRE LOAD LIMITS AT VARIOUS COLD INFLATION PRESSURES" in the TRA standard, and the "LOAD CAPACITY" in the ETRTO standard. In the case of a tire for a passenger car, the normal load corresponds to 88% of the above-described load unless otherwise specified.

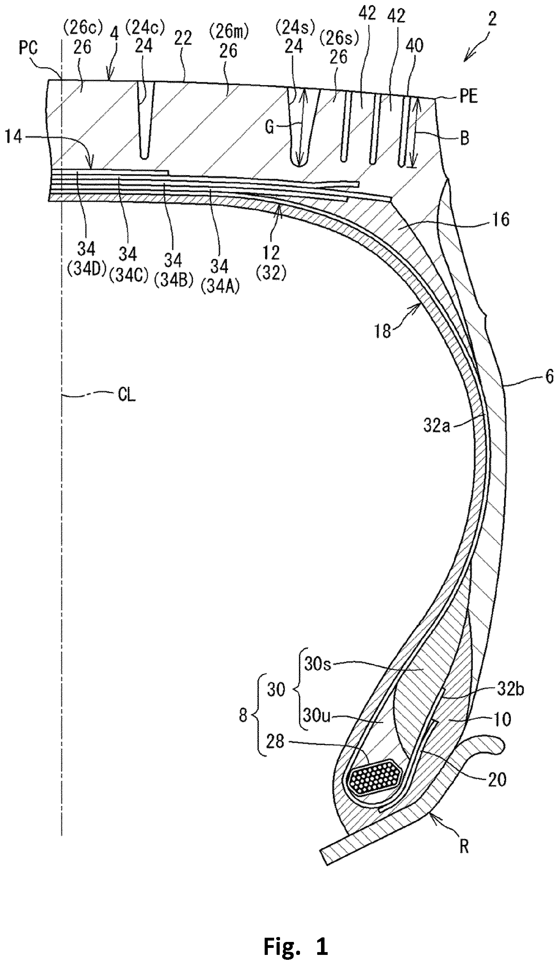

FIG. 1 illustrates a part of a pneumatic tire 2 (hereinafter, may be simply referred to as "tire 2") according to one embodiment of the present invention. The tire 2 is mounted to a heavy duty vehicle such as a truck and a bus. The tire 2 is a heavy duty pneumatic tire.

FIG. 1 illustrates a part of a cross-section of the tire 2 along the plane that includes the rotation axis of the tire 2. In FIG. 1, the left-right direction represents the axial direction of the tire 2, and the up-down direction represents the radial direction of the tire 2. The direction perpendicular to the drawing sheet surface of FIG. 1 represents the circumferential direction of the tire 2. In FIG. 1, an alternate long and short dash line CL represents the equator plane of the tire 2. In FIG. 1, the tire 2 is mounted on a rim R (normal rim).

The tire 2 includes a tread 4, a pair of sidewalls 6, a pair of beads 8, a pair of chafers 10, a carcass 12, a belt 14, a pair of cushion layers 16, an inner liner 18, and a pair of reinforcing layers 20.

The tread 4 comes into contact with a road surface at an outer surface 22, that is, a tread surface 22. Reference character PC represents an intersection point of the tread surface 22 and the equator plane. The intersection point PC represents the equator of the tire 2.

The tread 4 includes a base portion and a cap portion disposed outward of the base portion in the radial direction, which is not shown. The base portion is formed of low heat build-up crosslinked rubber. The cap portion is formed of crosslinked rubber adopted in consideration of wear resistance and grip performance.

In the tire 2, the tread 4 has grooves 24 which continuously extend in the circumferential direction, that is, the tread 4 has the circumferential grooves 24. Thus, the tread 4 has a plurality of land portions 26. The tread 4 has the plurality of the land portions 26 that are demarcated by the circumferential grooves 24.

Each sidewall 6 is continuous with the end of the tread 4. The sidewall 6 extends inward from the end of the tread 4 in the radial direction. The sidewall 6 is formed of crosslinked rubber.

Each bead 8 is disposed inward of the sidewall 6 in the radial direction. Each bead 8 includes a core 28 and an apex 30.

The core 28 extends in the circumferential direction. The core 28 includes a steel wire that is wound. The apex 30 is disposed outward of the core 28 in the radial direction. The apex 30 extends outward from the core 28 in the radial direction.

The apex 30 includes an inner apex 30u and an outer apex 30s. The outer apex 30s is disposed outward of the inner apex 30u in the radial direction. The inner apex 30u and the outer apex 30s are each formed of crosslinked rubber. The outer apex 30s is softer than the inner apex 30u.

Each chafer 10 is disposed outward of the bead 8 in the axial direction. The chafer 10 is disposed inward of the sidewall 6 in the radial direction. The chafer 10 comes into contact with the rim R. The chafer 10 is formed of crosslinked rubber.

The carcass 12 is disposed inward of the tread 4, the sidewalls 6, and the chafers 10. The carcass 12 extends on and between one of the beads 8 and the other of the beads 8. The carcass 12 has a radial structure. The carcass 12 includes at least one carcass ply 32. In the tire 2, the carcass 12 is formed of one carcass ply 32.

In the tire 2, the carcass ply 32 is turned up around the core 28 of each bead 8 from the inner side toward the outer side in the axial direction. The carcass ply 32 includes a ply body 32a that extends from one of the cores 28 toward the other of the cores 28, and a pair of turned-up portions 32b which are continuous with the ply body 32a and are each turned up around a corresponding one of the cores 28 from the inner side toward the outer side in the axial direction.

The carcass ply 32 includes multiple carcass cords aligned with each other, which is not shown. In the tire 2, the material of the carcass cord is steel. A cord formed of an organic fiber may be used as the carcass cord.

The belt 14 is disposed inward of the tread 4 in the radial direction. The belt 14 is disposed outward of the carcass 12 in the radial direction.

The belt 14 includes a plurality of layers 34 which are layered in the radial direction. In the tire 2, the belt 14 includes four layers 34. In the tire 2, the number of the layers 34 of the belt 14 is not particularly limited. The structure of the belt 14 is determined as appropriate in consideration of the specifications of the tire 2.

Each layer 34 includes multiple belt cords aligned with each other, which is not shown. Each belt cord is inclined relative to the equator plane. The material of the belt cord is steel.

In the tire 2, a second layer 34B disposed between a first layer 34A and a third layer 34C, among the four layers 34, has the largest width in the axial direction. A fourth layer 34D disposed on the outermost side in the radial direction has the smallest width in the axial direction.

Each cushion layer 16 is disposed between the belt 14 and the carcass 12 in a portion at the end of the belt 14, that is, in the end portion of the belt 14. The cushion layer 16 is formed of crosslinked rubber.

The inner liner 18 is disposed inward of the carcass 12. The inner liner 18 forms the inner surface of the tire 2. The inner liner 18 is formed of crosslinked rubber having excellent airtightness.

Each reinforcing layer 20 is disposed at the bead 8 portion. The reinforcing layer 20 is disposed outward of the bead 8 in the axial direction. The reinforcing layer 20 is disposed between the carcass ply 32 and the chafer 10. The inner end of the reinforcing layer 20 is disposed inward of the core 28 in the radial direction. The outer end of the reinforcing layer 20 is disposed between the core 28 and the end of the turned-up portion 32b in the radial direction.

The reinforcing layer 20 includes multiple filler cords aligned with each other, which is not shown. The material of the filler cord is steel.

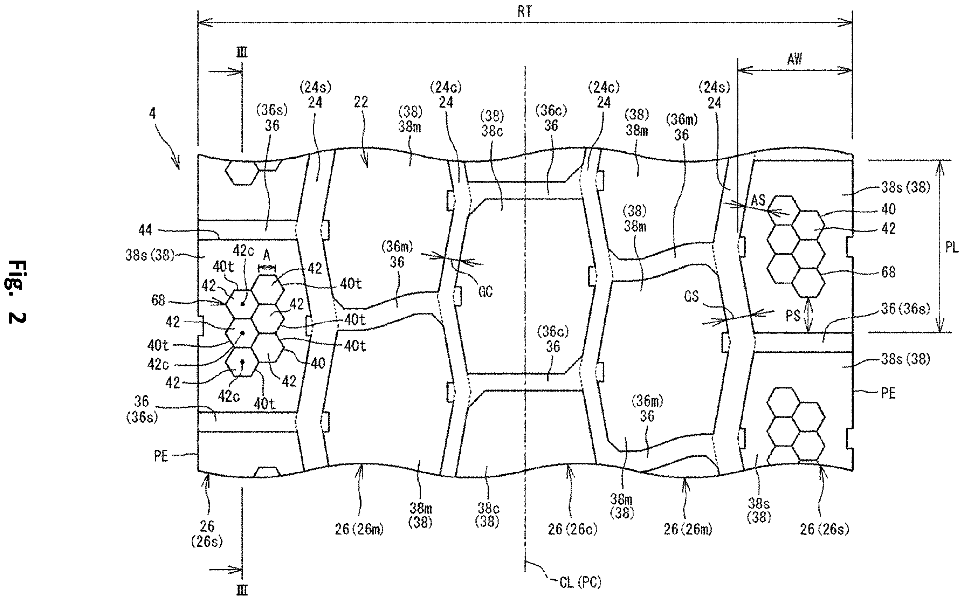

FIG. 2 is a development of the tread surface 22. In FIG. 2, the left-right direction represents the axial direction of the tire 2, and the up-down direction represents the circumferential direction of the tire 2. The direction perpendicular to the drawing sheet surface of FIG. 2 represents the radial direction of the tire 2.

In FIG. 2, reference numeral PE represents the end of the tread surface 22. In the tire 2, in a case where the end PE of the tread surface 22 cannot be distinguished based on the appearance, the axially outer end of the ground contact surface obtained when the tread 4 is brought into contact with a plane in a state where a normal load is applied to the tire 2 in the normal state and the camber angle is 0°, is defined as the end PE of the tread surface 22.

As described above, in the tire 2, the tread 4 has a plurality of land portions 26 demarcated by the circumferential grooves 24. In the tire 2, the tread 4 has at least three circumferential grooves 24 aligned in the axial direction. Thus, the tread 4 has at least four land portions 26. In the tire 2 shown in FIG. 1, four circumferential grooves 24 are formed in the tread 4, and five land portions 26 are formed on the tread 4.

Among the four circumferential grooves 24, circumferential grooves 24c disposed on the inner side in the axial direction, that is, the circumferential grooves 24c disposed near the equator PC are center circumferential grooves. Circumferential grooves 24s disposed on the outer side in the axial direction, that is, the circumferential grooves 24s disposed near the ends PE of the tread surface 22 are shoulder circumferential grooves. In a case where the circumferential groove 24 disposed on the equator PC is included in the circumferential grooves 24 formed in the tread 4, the circumferential groove 24 disposed on the equator PC is the center circumferential groove. Furthermore, in a case where the circumferential groove 24 is disposed between the center circumferential groove 24c and the shoulder circumferential groove 24s, the circumferential groove 24 disposed therebetween is a middle circumferential groove.

Each center circumferential groove 24c continuously extends so as to zigzag in the circumferential direction. In the tire 2, the center circumferential groove 24c may extend in a straight manner in the circumferential direction.

Each shoulder circumferential groove 24s continuously extends so as to zigzag in the circumferential direction. In the tire 2, the shoulder circumferential groove 24s may extend in a straight manner in the circumferential direction.

In FIG. 2, a double-headed arrow RT represents the width of the tread surface 22. The width RT is represented as the shortest distance from one of the ends PE of the tread surface 22 to the other of the ends PE of the tread surface 22. The width RT is measured along the tread surface 22.

In FIG. 2, a double-headed arrow GC represents the width of the center circumferential groove 24c. The width GC is represented as the shortest distance from one edge of the center circumferential groove 24c to the other edge thereof. A double-headed arrow GS represents the width of the shoulder circumferential groove 24s. The width GS is represented as the shortest distance from one edge of the shoulder circumferential groove 24s to the other edge thereof.

In the tire 2, the width GC of the center circumferential groove 24c is preferably 1 to 10% of the width RT of the tread surface 22 from the viewpoint of contribution to drainage performance and traction performance. The depth of the center circumferential groove 24c is preferably 13 to 25 mm.

In the tire 2, the width GS of the shoulder circumferential groove 24s is preferably 1 to 10% of the width RT of the tread surface 22 from the viewpoint of contribution to drainage performance and traction performance. The depth of the shoulder circumferential groove 24s is preferably 13 to 25 mm.

In the tire 2, the width GS of the shoulder circumferential groove 24s is greater than the width GC of the center circumferential groove 24c. The width GS of the shoulder circumferential groove 24s may be less than the width GC of the center circumferential groove 24c, or the width GS of the shoulder circumferential groove 24s may be equal to the width GC of the center circumferential groove 24c. The width of the circumferential groove 24 is determined as appropriate according to the specifications of the tire 2.

In the tire 2, the depth of the shoulder circumferential groove 24s is equal to the depth of the center circumferential groove 24c. The shoulder circumferential groove 24s may be deeper than the center circumferential groove 24c, or the shoulder circumferential groove 24s may be shallower than the center circumferential groove 24c. The depth of the circumferential groove 24 is determined as appropriate according to the specifications of the tire 2.

As described above, in the tire 2, since the four circumferential grooves 24 are formed in the tread 4, the five land portions 26 are formed on the tread 4. The land portions 26 are aligned in the axial direction and extend in the circumferential direction. In the tire 2, the land portions 26 have axial grooves 36 that extend across the land portions 26.

Among the five land portions 26, a land portion 26c disposed on the inner side in the axial direction, that is, the land portion 26c disposed on the equator PC is a center land portion. Land portions 26s disposed on the outer sides in the axial direction, that is, the land portions 26s that include the ends PE of the tread surface 22 are shoulder land portions. Furthermore, land portions 26m disposed between the center land portion 26c and the shoulder land portions 26s are middle land portions. In a case where, among the land portions 26 formed on the tread 4, the land portion 26 disposed on the inner side in the axial direction is not on the equator PC but near the equator PC, the land portion 26 disposed near the equator PC, that is, the land portion 26 disposed on the equator PC side is the center land portion.

In the tire 2, the five land portions 26 are formed of the center land portion 26c, a pair of the middle land portions 26m, and a pair of the shoulder land portions 26s. The center circumferential grooves 24c are located between the center land portion 26c and the middle land portions 26m. The shoulder circumferential grooves 24s are located between the middle land portions 26m and the shoulder land portions 26s.

The center land portion 26c has axial grooves 36c that extend across the center land portion 26c. The axial grooves 36c (hereinafter, also referred to as center axial grooves) extend and connect between one of the center circumferential grooves 24c and the other of the center circumferential grooves 24c.

Each middle land portion 26m has axial grooves 36m that extend across the middle land portion 26m. The axial grooves 36m (hereinafter, also referred to as middle axial grooves) extend and connect between the center circumferential grooves 24c and the shoulder circumferential grooves 24s.

Each shoulder land portion 26s has axial grooves 36s that extend across the shoulder land portion 26s. The axial grooves 36s (hereinafter, also referred to as the shoulder axial grooves) extend and connect between the shoulder circumferential grooves 24s and the ends PE of the tread surface 22.

In the tire 2, the width of the axial groove 36 is determined as appropriate so as to range from 1 to 10% of the width RT of the tread surface 22. The depth of the axial groove 36 is determined as appropriate so as to range from 13 to 25 mm.

In the tire 2, the width of the axial groove 36 may be equal to the width of the circumferential groove 24, the width of the axial groove 36 may be less than the width of the circumferential groove 24, or the width of the axial groove 36 may be greater than the width of the circumferential groove 24. The width of the axial groove 36 is determined as appropriate according to the specifications of the tire 2.

In the tire 2, the depth of the axial groove 36 may be equal to the depth of the circumferential groove 24, the depth of the axial groove 36 may be greater than the depth of the circumferential groove 24, or the depth of the axial groove 36 may be less than the depth of the circumferential groove 24. The depth of the axial groove 36 is determined as appropriate according to the specifications of the tire 2.

The center land portion 26c has a plurality of the center axial grooves 36c. Thus, the center land portion 26c has a plurality of center blocks 38c spaced from each other in the circumferential direction. In the tire 2, the center land portion 26c may be formed as a projection that is continuous in the circumferential direction. In this case, the center land portion 26c does not have the center axial grooves 36c described above.

Each middle land portion 26m has a plurality of the middle axial grooves 36m. Thus, a plurality of middle blocks 38m are formed so as to be spaced from each other in the circumferential direction. In the tire 2, the middle land portion 26m may be formed as a projection that is continuous in the circumferential direction. In this case, the middle land portion 26m does not have the middle axial grooves 36m described above.

Each shoulder land portion 26s has a plurality of the shoulder axial grooves 36s. Thus, a plurality of shoulder blocks 38s are formed so as to be spaced from each other in the circumferential direction. The shoulder land portion 26s may be formed as a projection that is continuous in the circumferential direction. In this case, the shoulder land portion 26s does not have the shoulder axial grooves 36s described above.

In the tire 2, among the plurality of land portions 26 demarcated by the circumferential grooves 24, at least one land portion 26 has sipes 40. The sipe 40 is a groove similar to the circumferential grooves 24 and the axial grooves 36 described above. Particularly, a groove, in which the width represented as a distance between walls of the groove is not greater than 1.5 mm, is called the sipe 40. In FIG. 2, the width of the sipe 40 is small and the gap between the walls is not shown.

In the tire 2, the land portion 26 has the sipes 40, whereby a plurality of rods 42 are formed so as to be surrounded by the sipes 40. In the tire 2, the sipes 40 that surround the rod 42 are also referred to as a tubular sipe 40t.

In the tire 2, the sipe 40 is located between one rod 42 and another rod 42 adjacent to the one rod 42 among the plurality of rods 42. The tubular sipe 40t that surrounds the one rod 42 among the two adjacent rods 42 and the tubular sipe 40t that surrounds the other rod 42 thereamong share a part of each other. The sipes 40 form a honeycomb shape by combination of a plurality of the tubular sipes 40t.

As shown in FIG. 2, in the tire 2, the tubular sipes 40t are formed in the shoulder block 38s that is a part of the shoulder land portion 26s. The tubular sipes 40t may be formed in the center block 38c that is a part of the center land portion 26c, and may be formed in the middle block 38m that is a part of the middle land portion 26m.

As described above, in the tire 2, the tubular sipe 40t is formed in the shoulder block 38s that is a part of the shoulder land portion 26s. In the tire 2, at least a part of the plurality of the shoulder blocks 38s in the shoulder land portion 26s may have a plurality of the tubular sipes 40t to form a plurality of rods 42. As shown in FIG. 2, in the tire 2, all of the plurality of the shoulder blocks 38s in the shoulder land portion 26s have the plurality of the tubular sipes 40t to form the plurality of rods 42. The positions at which the tubular sipes 40t are formed are determined as appropriate in consideration of the specifications of the tire 2, and the like.

As shown in FIG. 2, in the tire 2, the sipes 40 that surround the rods 42, that is, the tubular sipes 40t are disposed inward of outer edges 44 of the shoulder block 38s. The tubular sipe 40t does not intersect the circumferential grooves 24 and the axial grooves 36. The tubular sipe 40t is formed independently of the circumferential groove 24 and the axial groove 36.

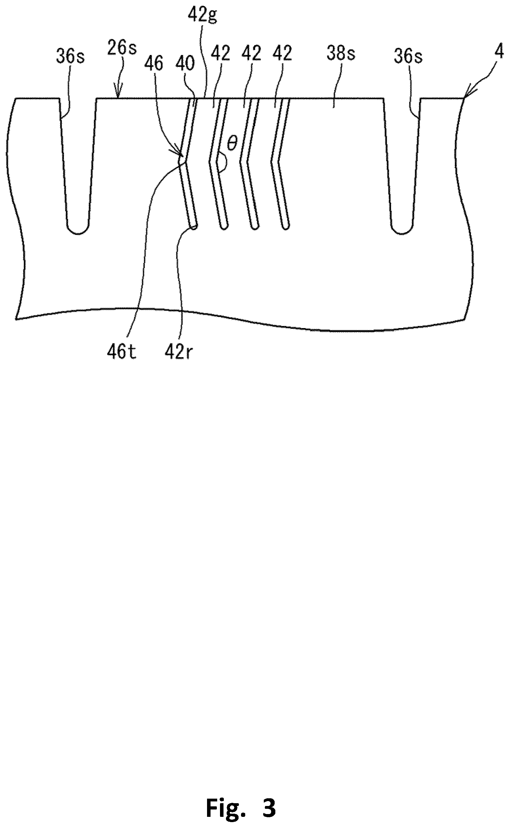

FIG. 3 is a cross-sectional view of the shoulder land portion 26s taken along a line III-III in FIG. 2. In FIG. 3, the left-right direction represents the circumferential direction of the tire 2, and the up-down direction represents the radial direction of the tire 2. The direction perpendicular to the drawing sheet surface of FIG. 3 represents the axial direction of the tire 2. In FIG. 2, the line III-III represents a straight line along the plane that includes centers 42c of the rods 42 aligned in the circumferential direction.

In the tire 2, each rod 42 is bent between an outer surface 42g of the rod 42 and a root 42r thereof. In other words, the rod 42 has a bent portion 46 between the outer surface 42g and the root 42r. As shown in FIG. 3, in the tire 2, the rod 42 is bent so as to form a corner at the bent portion 46.

In the tire 2, a vertex 46t portion of the bent portion 46 deviates from the outer surface 42g portion of the rod 42 in the circumferential direction. The position of the root 42r portion of the rod 42 is almost the same as the position of the outer surface 42g portion of the rod 42 in the circumferential direction. In the tire 2, the rod 42 is bent between the outer surface 42g and the root 42r such that the vertex 46t portion of the bent portion 46 deviates from the outer surface 42g portion of the rod 42 in the circumferential direction. In the tire 2, the rod 42 may be bent between the outer surface 42g and the root 42r such that the vertex 46t portion of the bent portion 46 deviates from the outer surface 42g portion of the rod 42 in the axial direction, or the rod 42 may be bent between the outer surface 42g and the root 42r such that the vertex 46t portion of the bent portion 46 deviates from the outer surface 42g portion of the rod 42 in the diagonal direction relative to the circumferential direction (or the axial direction).

Next, a method for producing the tire 2 will be described. In the production of the tire 2, the components such as the tread 4 and the sidewalls 6 are firstly combined in a forming machine (not shown), to prepare an unvulcanized tire 2, that is, a green tire 2r. In a vulcanizer described below, the green tire 2r is vulcanized to obtain the tire 2. The method for producing the tire 2 includes preparing the green tire 2r and vulcanizing the green tire 2r.

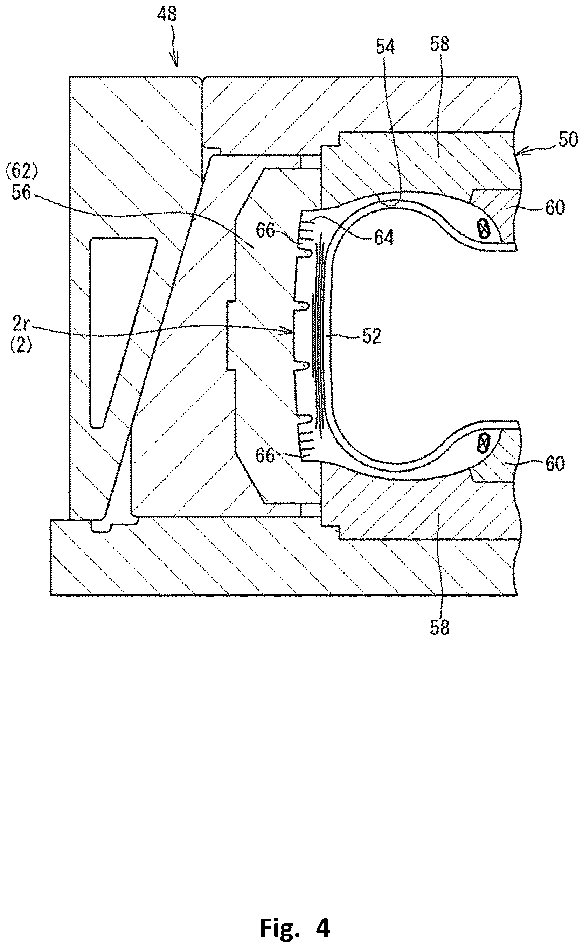

In the production of the tire 2, a vulcanizer 48 shown in FIG. 4 is used. In the vulcanizer 48, the green tire 2r is vulcanized. The vulcanizer 48 includes a mold 50 and a bladder 52.

The mold 50 has a cavity surface 54 on the inner surface. The cavity surface 54 comes into contact with the outer surface of the green tire 2r, to shape the outer surface of the tire 2.

The mold 50 is a segmented mold. The mold 50 includes a tread ring 56, a pair of side plates 58, and a pair of bead rings 60 as its components. In the mold 50, these components are combined to form the cavity surface 54 described above. The mold 50 shown in FIG. 4 is in a state where these components are combined, in other words, in a closed state.

In the mold 50, the tread 4 portion of the tire 2 is shaped by the tread ring 56. The tread ring 56 includes multiple segments 62. The sidewall 6 portions of the tire 2 are shaped by the side plates 58. The bead 8 portions of the tire 2 are shaped by the bead rings 60.

As described above, in the tire 2, the land portions 26 have the sipes 40. Therefore, the mold 50 for the tire 2 includes blades 64 for forming the sipes 40. The tread 4 portion of the tire 2 is shaped by the segments 62 among the components of the mold 50. In the mold 50, the blades 64 are disposed in portions, of the segments 62, for forming the land portions 26.

As described above, the sipes 40 disposed in the land portion 26 include the tubular sipes 40t. The tubular sipe 40t that surrounds one rod 42 among the plurality of the rods 42 formed in the land portion 26, and the tubular sipe 40t that surrounds another rod 42 adjacent to the one rod 42 thereamong share a part of each other. Therefore, the blades 64 are not formed by one plate but is formed by a three-dimensional structure. Specifically, the blades 64 form a honeycomb shape by combination of a plurality of tubular blades. The blades 64 are formed by using a three-dimensional laminate molding device as additive manufacturing, which is not described in detail. The material of the blades 64 is preferably stainless steel from the viewpoint of assuring stiffness of the blades 64. The thickness of the blade 64 is preferably not less than 0.2 mm and preferably not greater than 1.0 mm.

As described above, in the tire 2, the land portion 26 has the rods 42 surrounded by the sipes 40. The blades 64 of the mold 50 include tubular blades in order to form the rods 42 surrounded by the sipes 40. In the production of the tire 2, the rods 42 surrounded by the sipes 40 are formed by inserting the tubular blades in the green tire 2r. In the production of the tire 2, air cannot be prevented from being taken into the tubular blades. The residual air may cause bares on the outer surface 42g of the rod 42. An air discharging portion such as a vent hole is preferably provided in a portion, of the mold 50, for shaping the rods 42 from the viewpoint of producing the tire 2 having a good appearance quality.

In the production of the tire 2, when the tire 2 is demolded from the mold 50, the blades 64 inserted in the green tire 2r are removed from the tire 2. The tread ring 56 is preferably formed from multiple segments 62 from the viewpoint of easily removing the blades 64 from the tire 2. Specifically, the number of the segments 62 of the tread ring 56 is preferably not less than 12.

The bladder 52 is disposed on the inner side of the mold 50. The bladder 52 is formed of crosslinked rubber. The inside of the bladder 52 is filled with a heating medium such as steam. Thus, the bladder 52 expands. FIG. 4 shows the bladder 52 that is filled with the heating medium and has expanded. The bladder 52 comes into contact with the inner surface of the green tire 2r and shapes the inner surface of the tire 2. In the production of the tire 2, a rigid core made of a metal may be used instead of the bladder 52.

In the production of the tire 2, the green tire 2r is put into the mold 50 having a predetermined temperature which has been set. After the green tire 2r has been put, the mold 50 is closed. The bladder 52, which has been filled with the heating medium and thus expanded, presses the green tire 2r against the cavity surface 54 from the inner side. The green tire 2r is pressurized and heated in the mold 50 for a predetermined time period. Thus, the rubber compositions of the green tire 2r are crosslinked to obtain the tire 2. In the method for producing the tire 2, vulcanization conditions such as a temperature, a pressure, and a time are not particularly limited. Typical vulcanization conditions can be adopted.

In the production of the tire 2, heat is transmitted to the green tire 2r through the mold 50 and the bladder 52. In the green tire 2r, a portion such as the sidewall 6 portions having a small volume and a portion such as the tread 4 portion having a large volume are mixed. Heat is easily transmitted to the portion having a small volume whereas heat is not easily transmitted to the portion having a large volume.

If the time for which the green tire 2r is pressurized and heated, that is, a vulcanization time is set based on the portion to which heat is easily transmitted, vulcanization may not sufficiently progress in the portion to which heat is not easily transmitted. Meanwhile, if the vulcanization time is set based on the portion to which heat is not easily transmitted, vulcanization may excessively progress in the portion to which heat is easily transmitted.

The fuel consumption regulations for vehicles have been introduced in consideration of the environments. Rolling resistance needs to be reduced for the tire 2 in order to clear the regulations.

In a case where a vulcanization temperature is set to be lower than a normal temperature, excessive progress of vulcanization can be inhibited and rolling resistance can be reduced. However, in this case, the vulcanization time is set to be longer and the productivity of the tire 2 may be reduced.

In a case where low heat build-up rubber is adopted, rolling resistance can be reduced while the productivity is maintained. However, in this case, wear resistance of the tire may be degraded as compared with a tire formed from rubber adopted without considering the low heat build-up.

In the production of the tire 2, when the green tire 2r is pressurized and heated in the mold 50, the blades 64 described above are inserted in a portion (hereinafter, referred to as a portion 66 corresponding to the land portion), of the green tire 2r, corresponding to the land portion 26 to which heat is not easily transmitted.

In the production of the tire 2, the blades 64 are inserted deep in the portion 66 corresponding to the land portion. Thus, the portion 66 corresponding to the land portion is heated also from the inside thereof. Therefore, a time until the portion 66 corresponding to the land portion reaches an optimal vulcanized state is shortened. The tire 2 contributes to enhancement of the productivity.

In the tire 2, a time required for forming the tread 4 is shortened. The time is thus shortened to inhibit excessive progress of vulcanization in a portion, having a small volume, to which heat is easily transmitted. Increase of the loss tangent (tanδ) due to excessive vulcanization is inhibited. Therefore, the tire 2 allows reduction of rolling resistance without depending on low-heat build-up rubber having poor wear resistance.

A tire includes sipes having, for example, a wavy structure or a Miura fold structure on a land portion in order to enhance on-ice performance and wet performance. The sipe extends across the land portion in almost the axial direction, and the sipe may open when a load is applied to the land portion, so that the sipe may not sufficiently function. Furthermore, the stiffness of the land portion is reduced, so that wear resistance may become insufficient.

In the tire 2, as described above, the land portion 26 has the sipes 40 formed therein, to form a plurality of the rods 42 that are surrounded by the sipes 40. The sipe 40 is formed in a tubular shape. Therefore, the opening of the sipe 40 can be reduced as compared with a conventional sipe that extends in the axial direction. Furthermore, the rod 42 surrounded by the sipes 40 has the bent portion 46 between the outer surface 42g and the root 42r. Thus, if the land portion moves due to application of load, the sipe 40 is unlikely to open. In the tire 2, the sipe 40 sufficiently functions and reduction of the stiffness due to the sipes 40 is effectively inhibited. In the tire 2, good on-ice performance and wet performance are obtained, and wear resistance is improved.

In the tire 2, the tread 4 is effectively heated. In the tire 2, the productivity is enhanced, and improvement of wear resistance and reduction of rolling resistance are achieved. The sipes 40 sufficiently function. Therefore, in the tire 2, good on-ice performance and wet performance are obtained.

The thickness of the tire 2 is measured along the line normal to the outer surface of the carcass 12 (specifically, the ply body 32a) on the cross-section of the tire 2 shown in FIG. 1. The tire 2 has the largest thickness at each end PE of the tread surface 22. In the tire 2, the portions on and around the shoulder land portions 26s have the largest volume.

In the tire 2, the shoulder land portions 26s preferably have the sipes 40 formed therein, and preferably have the plurality of the rods 42 surrounded by the sipes 40, from the viewpoint of effectively heating the tread 4.

As described above, in the tire 2, each shoulder land portion 26s has the shoulder axial grooves 36s formed therein, and has a plurality of the shoulder blocks 38s that are spaced from each other in the circumferential direction. From the viewpoint of effectively heating the tread 4, at least a part of the plurality of the shoulder blocks 38s preferably has the sipes 40 formed therein and has a plurality of the rods 42 formed therein. All of the plurality of the shoulder blocks 38s formed on the shoulder land portion 26s more preferably have the sipes 40 formed therein and have the plurality of the rods 42 formed therein. In this case, from the viewpoint of assuring stiffness of the shoulder block 38s, the sipes 40 are preferably independent of the circumferential grooves 24 (specifically, the shoulder circumferential grooves 24s) and the axial grooves 36 (specifically, the shoulder axial grooves 36s).

In FIG. 1, a double-headed arrow G represents the depth of the shoulder circumferential groove 24s. A double-headed arrow B represents the depth of the sipe 40 formed in the shoulder block 38s. The depth G of the shoulder circumferential groove 24s and the depth B of the sipe 40 can be specified based on the mold 50 for the tire 2.

In the tire 2, from the viewpoint of effectively heating the tread 4, the depth B of the sipe 40 is preferably not less than 3 mm. From the viewpoint of assuring stiffness of the shoulder block 38s, the depth B of the sipe 40 is preferably not greater than 20 mm.

In the tire 2, from the viewpoint of effectively heating the tread 4, the depth B of the sipe 40 is preferably not less than 50% of the depth G of the shoulder circumferential groove 24s. From the viewpoint of assuring stiffness of the shoulder block 38s, the depth B of the sipe 40 is preferably not greater than 100% of the depth G of the shoulder circumferential groove 24s.

In FIG. 2, a double-headed arrow AW represents the width of the shoulder block 38s in the axial direction. The width AW in the axial direction is represented as the largest width. A double-headed arrow AS represents a distance from the sipe 40 to the circumferential groove 24 in the axial direction. The distance AS in the axial direction is represented as the shortest distance. A double-headed arrow PL represents the length of the shoulder block 38s in the circumferential direction. The length PL in the circumferential direction is represented as the largest length. A double-headed arrow PS represents a distance from the sipe 40 to the axial groove 36 in the circumferential direction. The distance PS in the circumferential direction is represented as the shortest length.

In the tire 2, from the viewpoint of assuring stiffness of the shoulder block 38s, the sipe 40 is spaced from the circumferential groove 24. Specifically, a ratio of the distance AS from the sipe 40 to the circumferential groove 24 in the axial direction to the width AW of the shoulder block 38s in the axial direction is not less than 0.1. From the viewpoint of assuring flexibility of the shoulder block 38s, the ratio is preferably not greater than 0.3.

In the tire 2, from the viewpoint of assuring stiffness of the shoulder block 38s, the sipe 40 is spaced from the axial groove 36. Specifically, a ratio of the distance PS from the sipe 40 to the axial groove 36 in the circumferential direction to the length PL of the shoulder block 38s in the circumferential direction is preferably not less than 0.1. From the viewpoint of assuring flexibility of the shoulder block 38s, the ratio is preferably not greater than 0.3.

In the tire 2, from the viewpoint that the land portion 26 has a sufficient stiffness and good wear resistance is obtained, the cross-sectional shape of the rod 42 is preferably a polygonal shape having at least three sides. In the tire 2, examples of the cross-sectional shape of the rod 42 include a triangular shape, a quadrangular shape, a pentagonal shape, and a hexagonal shape. From the viewpoint of improving wear resistance, as shown in FIG. 2, the cross-sectional shape of the rod 42 is more preferably a hexagonal shape. In this case, the cross-sectional shape of the rod 42 is even more preferably a regular hexagonal shape in which the lengths of all the sides are equal to each other. In the tire 2, the cross-sectional shape of the rod 42 is represented by the shape of the outer surface 42g of the rod 42. The cross-sectional shape of the rod 42 can be specified based on the mold 50 for the tire 2.

In the tire 2, in a case where the cross-sectional shape of the rod 42 is a polygonal shape having at least three sides, at least one side of the cross-sectional shape of the rod 42 preferably extends in the axial direction from the viewpoint that the rod 42 can effectively contribute to assuring the stiffness of the land portion 26. As described above, in the tire 2 shown in FIG. 2, the cross-sectional shape of the rod 42 is a regular hexagonal shape. In the rod 42, two sides of the cross-sectional shape extend in the axial direction. The rod 42 can effectively contribute to assuring stiffness of the land portion 26. From this viewpoint, the rod 42 is preferably formed such that the cross-sectional shape is a regular hexagonal shape, and two sides of the cross-sectional shape extend in the axial direction.

In FIG. 2, a double-headed arrow A represents the length of the side of the cross-sectional shape of the rod 42. The length A of the side can be specified based on the mold 50 for the tire 2. In a case where the cross-sectional shape of the rod 42 has the side that extends in the axial direction, the length A is represented as the length of the side that extends in the axial direction. In a case where a plurality of sides of the cross-sectional shape do not include a side that extends in the axial direction, and the plurality of sides of the cross-sectional shape have different lengths, the length A of the side is represented as the average value of the lengths of the sides.

In the tire 2, the length A of the side of the cross-sectional shape of the rod 42 is preferably not less than 3 mm and preferably not greater than 8 mm. In the tire 2, by setting the length A of the side to be not less than 3 mm, occurrence of bare due to residual air is inhibited, and appearance quality is good. From these viewpoints, the length A of the side is more preferably not less than 4 mm. By setting the length A of the side to be not greater than 8 mm, the plurality of the rods 42 surrounded by the sipes 40 can be formed in the land portion 26 so as to contribute to enhancement of stiffness. From this viewpoint, the length A of the side is more preferably not greater than 7 mm.

As described above, in the tire 2, the plurality of the rods 42 surrounded by the sipes 40 are formed in the land portion 26. In the tire 2, positioning of the plurality of the rods 42 is not particularly limited. From the viewpoint that the rods 42 can effectively contribute to enhancement of stiffness of the land portion 26, the plurality of the rods 42 formed in the land portion 26 are preferably aligned in the axial direction and the circumferential direction, as shown in FIG. 2. In this case, the number of the rods 42 aligned in the circumferential direction is more preferably greater than the number of the rods 42 aligned in the axial direction.

In the tire 2, the land portion 26 has a rod group 68 that includes a plurality of the rods 42 surrounded by the sipes 40. In a case where the land portion 26 is formed as a projection that is continuous in the circumferential direction, a plurality of the rod groups 68 are disposed in the land portion 26 so as to be spaced from each other over a predetermined distance in the circumferential direction. In a case where the land portion 26 includes a plurality of blocks 38, one rod group 68 is formed in one block 38 as shown in FIG. 2.

In the tire 2, the number of the rods 42 in one rod group 68 is not particularly limited. From the viewpoint that the rod group 68 including a plurality of the rods 42 can effectively contribute to stiffness of the land portion 26, the number of the rods 42 in one rod group 68 is preferably not less than two, more preferably not less than four, and even more preferably not less than six. The upper limit of the number of the rods 42 in one rod group 68 is determined according to the size of the land portion 26 on which the rod group 68 is formed. From the viewpoint of obtaining the tire 2 that inhibits occurrence of bare and that has a good appearance quality, the number of the rods 42 in one rod group 68 is preferably not greater than 20 and more preferably not greater than 12.

As described above, in the tire 2, the rod 42 has the bent portion 46 between the outer surface 42g and the root 42r. The tire 2 rotates in the circumferential direction. From the viewpoint that the bent portion 46 of the rod 42 can effectively contribute to enhancement of stiffness of the land portion 26, the vertex 46t portion of the bent portion 46 preferably deviates from the outer surface 42g portion of the rod 42 in the circumferential direction, as shown in FIG. 3.

As described above, in the tire 2, the rod 42 is bent so as to form a corner, at the bent portion 46. From the viewpoint of inhibiting the movement of the rod 42 and enhancing stiffness of the land portion 26, the rod 42 is preferably bent so as to form a corner at the bent portion 46.

In FIG. 3, an angle θ represents a bending angle at which the rod 42 is bent. The bending angle θ can be specified based on a bending angle of the blade 64, in the mold 50, for forming the sipe 40.

In the tire 2, the bending angle θ of the rod 42 is preferably not less than 100°. Thus, in the production of the tire 2, the tire 2 can be demolded from the mold 50 without degrading the appearance quality. From this viewpoint, the bending angle θ is more preferably not less than 120°. From the viewpoint of obtaining the rod 42 that can contribute to enhancement of stiffness of the land portion 26, the bending angle θ is preferably not greater than 160°.

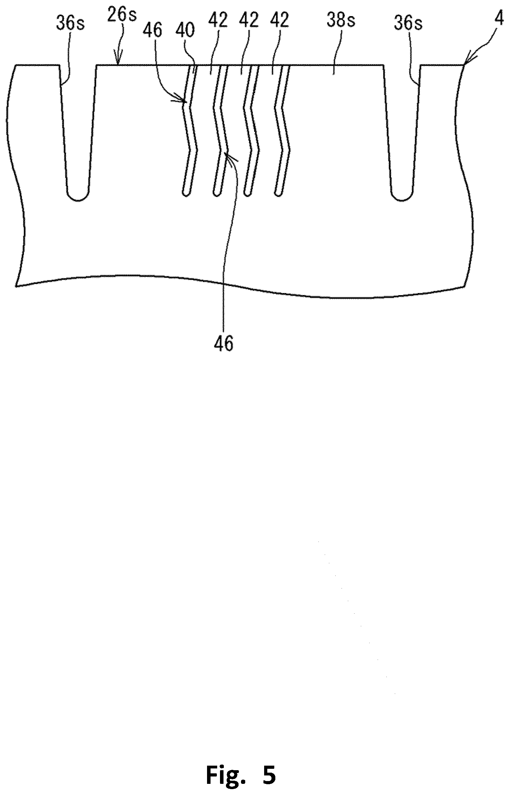

The rod 42 shown in FIG. 3 has one bent portion 46. As shown in FIG. 5, the rod 42 may have two bent portions 46. Also in this case, the movement of the rod 42 can be effectively reduced, and stiffness of the land portion 26 can be effectively enhanced. In a case where the number of the bent portions 46 of the rod 42 is increased, the blades 64 are not easily removed from the tire 2 and air is likely to remain in the tubular blades in the production of the tire 2. From the viewpoint that stiffness of the land portion 26 can be effectively enhanced and the appearance quality can be good in the tire 2, the number of the bent portions 46 of the rod 42 is preferably not less than one and preferably not greater than two.

As is apparent from the above description, the tread 4 is effectively heated for the pneumatic tire 2 of the present invention. For the tire 2, productivity can be enhanced, and improvement of wear resistance and reduction of rolling resistance can be achieved. The sipe 40 sufficiently functions, so that good on-ice performance and wet performance are obtained in the tire 2.

The embodiment disclosed herein is in all aspects illustrative and not restrictive. The technological scope of the present invention is not limited to the embodiment described above but only by the scope of the claims.

### [Examples]

The present invention will be described below in more detail according to examples and the like. However, the present invention is not limited to only the examples.

### [Example 1]

A heavy duty pneumatic tire (tire size=315/70R22.5) having the structure shown in FIGS. 1 to 3 and the specifications indicated below in Table 1 was obtained.

In example 1, the shoulder block had sipes formed therein and had six rods surrounded by the sipes. The cross-sectional shape of the rod was a regular hexagonal shape, and this is indicted as "H" in the cell for the structure in Table 1. The length A of the side of the regular hexagonal shape was 5 mm. The number of the bent portions in one rod was one. The bending angle θ was 160°.

### [Comparative example 1]

A tire of comparative example 1 was obtained in the same manner as in example 1 except that six rods surrounded by the sipes were not formed in the shoulder block. Comparative example 1 represents a conventional tire.

### [Comparative example 2]

A tire of comparative example 2 was obtained in the same manner as in example 1 except that the shoulder block had a sipe forming a wavy structure, and six rods surrounded by the sipes were not formed. Comparative example 2 represents a conventional tire. "W" in the cell for the structure in Table 1 indicates that the sipe forming the wavy structure was formed.

### [Comparative example 3]

A tire of comparative example 3 was obtained in the same manner as in example 1 except that the shoulder block had a sipe forming a Miura fold structure, and six rods surrounded by the sipes were not formed. Comparative example 3 represents a conventional tire. "M" in the cell for the structure in Table 1 indicates that the sipe forming the Miura fold structure was formed.

### [Example 2]

A tire of example 2 was obtained in the same manner as in example 1 except that the length A of the side was as indicated below in Table 1.

### [Example 3 and Comparative example 4]

A tire of example 3 and a tire of comparative example 4 were each obtained in the same manner as in example 1 except that the bending angle θ was as indicated below in Table 2. Since the rod in comparative example 4 did not have the bent portion, the number of the bent portions is indicated as "0 (zero)".

### [Example 4]

A tire of example 4 was obtained in the same manner as in example 1 except that the number of the bent portions was as indicated below in Table 2.

### [Example 5 and Comparative example 5]

A tire of example 5 and a tire of comparative example 5 were each obtained in the same manner as in example 1 except that the number of the rods surrounded by the sipes formed in the shoulder block was as indicated below in Table 2.

### [Wet performance (WET performance)]

Each sample tire was mounted on a normal rim and was inflated with air, and the internal pressure of the tire was adjusted to 850 kPa. The tires were mounted to all wheels of a test vehicle (10t truck). The test vehicle was caused to run on a wet road surface (wet asphalt road having a 5 mm water film) so as to be fixed at the second gear-1500 rpm in a state where a cargo corresponding to 50% of a standard loading capacity was loaded in the front portion of a truck bed, and a passing time from a moment of engagement of the clutch to passing of 10 m was measured. The result is indicated below as indexes in Tables 1 and 2. The greater the value is, the shorter the passing time is and the more excellent wet performance is.

### [On-ice performance]

Each sample tire was mounted on a normal rim and was inflated with air, and the internal pressure of the tire was adjusted to 850 kPa. The tires were mounted to all wheels of a test vehicle (10t truck). The test vehicle was suddenly braked on an ice sheet road by locking all the wheels when the speed was 40 km/h in a state where a cargo corresponding to 50% of a standard loading capacity was loaded in the front portion of a truck bed, and a braking distance from the braking to stop of the vehicle was measured. The result is indicated below as indexes in Tables 1 and 2. The greater the value is, the shorter the braking distance is and the more excellent the on-ice performance is.

### [Wear resistance]

Each sample tire was mounted on a normal rim and was inflated with air, and the internal pressure of the tire was adjusted to 850 kPa. The tires were mounted to a front axle of a test vehicle (10t truck). The vehicle was caused to run on an ordinary road in a state where a cargo corresponding to 50% of a standard loading capacity was loaded in the front portion of a truck bed, and a running distance was measured until occurrence of uneven wear. The result is indicated below as indexes in Tables 1 and 2. Uneven wear is less likely to occur according to the index value becoming greater, and the greater the index value is, the more excellent wear resistance is.

### [Rolling resistance (RRC)]

A rolling resistance tester was used to measure a rolling resistance coefficient (RRC) by performing running with each sample tire on a drum at a speed of 80 km/h under the following conditions. The result is indicated below as indexes in Tables 1 and 2. The greater the value is, the less rolling resistance is and the more excellent the evaluation is.
Rim: normal rim
Internal pressure: 900 kPa
Vertical load: 33.35 kN

### [Productivity]

A time (that is, vulcanization time) required for vulcanizing a green tire was measured for each sample tire. The result is indicated below as indexes in Tables 1 and 2. The greater the value is, the shorter the vulcanization time is and the more excellent the productivity is.

### [Quality]

The outer surface of each sample tire was observed, and whether or not bare occurred and whether or not damage to the tread occurred were confirmed. The result is indicated below as grades in Tables 1 and 2
- B/T: Bare occurred.
- DM/T: Damage to the tread such as a deficient part occurred.
- G: Bare and damage to the tread did not occur.

**[Table 1]**

| | Comparative example 1 | Comparative example 2 | Comparative example 3 | Example 1 | Example 2 |
|---|---|---|---|---|---|
| Structure | - | W | M | H | H |
| A [mm] | - | - | - | 5 | 3 |
| Number | - | - | - | 6 | 6 |
| θ [°] | - | - | - | 160 | 160 |
| Number of bent portions | - | - | - | 1 | 1 |
| WET performance | 80 | 100 | 105 | 110 | 108 |
| On-ice performance | 80 | 100 | 108 | 115 | 113 |
| Wear resistance | 125 | 100 | 110 | 120 | 123 |
| RRC | 80 | 100 | 108 | 113 | 111 |
| Productivity | 80 | 100 | 100 | 120 | 115 |
| Quality | G | G | G | G | B/T |

**[Table 2]**

| | Example 3 | Comparative example 4 | Example 4 | Comparative example 5 | Example 5 |
|---|---|---|---|---|---|
| Structure | H | H | H | H | H |
| A [mm] | 5 | 5 | 5 | 5 | 5 |
| Number | 6 | 6 | 6 | 1 | 4 |
| θ [°] | 120 | 180 | 160 | 160 | 160 |
| Number of bent portions | 1 | 0 | 2 | 1 | 1 |
| WET performance | 111 | 105 | 110 | 101 | 107 |
| On-ice performance | 115 | 108 | 115 | 100 | 111 |
| Wear resistance | 122 | 110 | 120 | 125 | 122 |
| RRC | 113 | 113 | 113 | 104 | 110 |
| Productivity | 120 | 120 | 120 | 110 | 115 |
| Quality | G | G | G | G | G |

As indicated in Tables 1 and 2, in examples, productivity was enhanced, and improvement of wear resistance and reduction of rolling resistance were achieved. In the examples, it was also confirmed that on-ice performance and wet performance were good. The evaluation result clearly indicates that the present invention is superior.

The above-described technology for improving wear resistance and reducing rolling resistance while enhancing productivity is applicable to various tires.

## Claims

1. A pneumatic tire (2) comprising:
a tread (4) having a plurality of land portions (26) demarcated by circumferential grooves (24), wherein
sipes (40) are formed in at least one of the land portions (26) to form a plurality of rods (42) each surrounded by the sipes (40),
each rod (42) has a bent portion (46) between an outer surface (42g) of the rod (42) and a root (42r) thereof,
each rod (42) is bent so as to form a corner at the bent portion (46) with the land portions (26) being shoulder land portions (26s) that are disposed on outer sides in the axial direction and that extend in the circumferential direction, each shoulder land portion (26s) having an axial groove (36s) that extends across the shoulder land portion (26s) to form a plurality of shoulder blocks (38s) spaced from each other in the circumferential direction, and
at least a part of the plurality of shoulder blocks (38s) has the rods (42), **characterized in that**
a ratio of a distance (AS) from the sipes (40) to the circumferential groove (24) in the axial direction to a width (AW) of the shoulder block (38s) in the axial direction being not less than 0.1.

2. The pneumatic tire (2) according to claim 1, wherein a cross-sectional shape of each rod (42) is a polygonal shape having at least three sides.

3. The pneumatic tire (2) according to claim 2, wherein at least one side of the cross-sectional shape of the rod (42) extends in an axial direction.

4. The pneumatic tire (2) according to claim 2 or 3, wherein the cross-sectional shape of the rod (42) is a hexagonal shape.

5. The pneumatic tire (2) according to any one of claims 1 to 4, wherein the rods (42) are aligned in the axial direction and a circumferential direction.

6. The pneumatic tire (2) according to any one of claims 1 to 5, wherein a vertex (46t) portion of the bent portion (46) deviates from an outer surface (42g) portion of each rod (42) in the circumferential direction.

7. The pneumatic tire (2) according to any one of claims 1 to 6, wherein the sipes (40) are independent of the circumferential grooves (24) and the axial groove (36).

## Patentansprüche

1. Luftreifen (2), umfassend:
eine Lauffläche (4) mit mehreren Landabschnitten (26), die durch Umfangsrillen (24) eingegrenzt sind, wobei
Feinschnitte (40) in zumindest einem der Landabschnitte (26) gebildet sind, um mehrere Stäbe (42) zu bilden, die jeweils von den Feinschnitten (40) umgeben sind,
jeder Stab (42) einen gekrümmten Abschnitt (46) zwischen einer Außenfläche (42g) des Stabes (42) und einem Ursprung (42r) von diesem aufweist,
jeder Stab (42) derart gekrümmt ist, dass eine Ecke an dem gekrümmten Abschnitt (46) gebildet ist, wobei die Landabschnitte (26) Schulterlandabschnitte (26s) sind, die in der Axialrichtung an Außenseiten angeordnet sind und die sich in der Umfangsrichtung erstrecken, wobei jeder Schulterlandabschnitt (26s) eine Axialrille (36s) aufweist, die sich über den Schulterlandabschnitt (26s) erstreckt, um mehrere Schulterblöcke (38s) zu bilden, die in der Umfangsrichtung voneinander beabstandet sind, und
zumindest ein Teil der mehreren Schulterblöcke (38s) die Stäbe (42) aufweist,
**dadurch gekennzeichnet, dass**
ein Verhältnis einer Distanz (AS) von den Feinschnitten (40) zu der Umfangsrille (24) in der Axialrichtung zu einer Breite (AW) der Schulterblöcke (38s) in der Axialrichtung nicht kleiner als 0,1 ist.

2. Luftreifen (2) nach Anspruch 1, wobei eine Querschnittsform jedes Stabes (42) eine Polygonform mit mindestens drei Seiten ist.

3. Luftreifen (2) nach Anspruch 2, wobei sich zumindest eine Seite der Querschnittsform des Stabes (42) in einer Axialrichtung erstreckt.

4. Luftreifen (2) nach Anspruch 2 oder 3, wobei die Querschnittsform des Stabes (42) eine Hexagonalform ist.

5. Luftreifen (2) nach einem der Ansprüche 1 bis 4, wobei die Stäbe (42) in der Axialrichtung und in einer Umfangsrichtung ausgerichtet sind.

6. Luftreifen (2) nach einem der Ansprüche 1 bis 5, wobei ein Abschnitt eines Scheitels (46t) des gekrümmten Abschnitts (46) von einem Abschnitt der Außenfläche (42g) jedes Stabes (42) in der Umfangsrichtung abweicht.

7. Luftreifen (2) nach einem der Ansprüche 1 bis 6, wobei die Feinschnitte (40) von den Umfangsrillen (24) und der Axialrille (36) unabhängig sind.

## Revendications

1. Bandage pneumatique (2) comprenant :
une bande de roulement (4) ayant une pluralité de portions en relief (26) délimitées par des rainures circonférentielles (24), dans lequel des fentes (40) sont formées dans l'une au moins des portions en relief (26) pour former une pluralité de tiges (42) entourées chacune par les fentes (40),
chaque tige (42) a une portion cintrée (46) entre une surface extérieure (42g) de la tige (42) et une racine (42r) de celle-ci ;
chaque tige (42) est cintrée de manière à former un coin au niveau de la portion cintrée (46) avec les portions (26) étant des portions en relief d'épaulement (26s) qui sont disposées sur des côtés extérieurs dans la direction axiale et qui s'étendent dans la direction circonférentielle, chaque portion en relief d'épaulement (26s) ayant une rainure axiale (36s) qui s'étend à travers la portion en relief d'épaulement (26s) pour former une pluralité de blocs d'épaulement (38s) espacés les uns des autres dans la direction circonférentielle, et
au moins une partie de la pluralité de blocs d'épaulement (38s) présente les tiges (42),
**caractérisé en ce que**
un rapport d'une distance (AS) depuis les fentes (40) jusqu'à la rainure circonférentielle (24) dans la direction axiale sur une largeur (AW) du bloc d'épaulement (38s) dans la direction axiale n'est pas inférieur à 0,1.

2. Bandage pneumatique (2) selon la revendication 1, dans lequel une forme de section transversale de chaque tige (42) est une forme polygonale ayant au moins trois côtés.

3. Bandage pneumatique (2) selon la revendication 2, dans lequel au moins un côté de la forme de section transversale de la tige (42) s'étend dans une direction axiale.

4. Bandage pneumatique (2) selon la revendication 2 ou 3, dans lequel la forme de section transversale de la tige (42) est une forme hexagonale.

5. Bandage pneumatique (2) selon l'une quelconque des revendications 1 à 4, dans lequel les tiges (42) sont alignées dans la direction axiale et dans une direction circonférentielle.

6. Bandage pneumatique (2) selon l'une quelconque des revendications 1 à 5, dans lequel une portion de sommet (46t) de la portion cintrée (46) dévie par rapport à une portion de surface extérieure (42g) de chaque tige (42) dans la direction circonférentielle.

7. Bandage pneumatique (2) selon l'une quelconque des revendications 1 à 6, dans lequel les fentes (40) sont indépendantes des rainures circonférentielles (24) et de la rainure axiale (36).
